# EUROPEAN PATENT SPECIFICATION

(11) **EP 2 813 380 B1**
(45) Date of publication and mention of the grant of the patent: **27.04.2016**
(21) Application number: 14171699.3
(22) Date of filing: 10.06.2014
(51) Int. Cl.: B60G 1/04, B60G 21/05, B62D 49/06

(54) **A tractor having isodiametric wheels with a simplified structure and maintenance**
Ein Traktor mit isodiametrischen Rädern mit einer vereinfachten Struktur und Wartung
Un tracteur à roues isodiamétriques avec une structure et la maintenance simplifiée

(30) Priority: 14.06.2013 IT RE20130044
(43) Date of publication of application: 17.12.2014
(73) Proprietor: BCS S.p.A., 20123 Milano (MI) (IT)
(72) Inventor: Bonciani, Riccardo, 20081 ABBIATEGRASSO (IT)
(74) Representative: Giuli, Maurizio Mario Galdino

(56) References cited:
- EP-A1- 2 329 968
- EP-A2- 1 078 622
- EP-A2- 1 627 762
- GB-A- 909 705
- JP-A- S5 522 519
- JP-A- 2010 221 864
- US-A- 3 976 302

## Description

The present invention relates to an isodiametric tractor, as per the preamble of claim 1, with a simplified structure and maintenance which can be used in agriculture and/or in gardening and/or in industry. An example of such a tractor is disclosed by GB 909 705.

Tractors of the traditional type became widespread in Europe after the First World War. They are considerably heavy and large-sized vehicles, characterized by rear wheels which are much larger than the front wheels due to the fact that these tractors were designed for towing (ploughs, trailers, etc.). The towing force is mainly exerted by the rear wheels and to a very small extent by the front wheels, it improves, moreover, with an increase in the mass of the tractor.

When first conceived, traditional tractors were substantially inspired by the geometry of the ox, a towing animal *par excellence,* which combines its two massive and sturdy hind legs (pulling legs) with two slender and lean front legs (directional legs).

After the Second World War, traditional tractors evolved with the addition of a rear and subsequently also front power-take, thus also extending their use to motorized tools, but their geometry remained unvaried, as towing operations remained the fundamental applications.

After the Second World War, a new type of tractor began to become widespread in Europe, not designed for towing but for working in confined spaces such as, for example, greenhouses, the narrow rows of vineyards, the low nets of orchards. A vehicle was therefore required, which, with the same power as a traditional tractor, was however much smaller, lower and narrower than its older brother. Isodiametric tractors were conceived, thus named according to one of their most visible features, i.e. four identical wheels. In Greek, iso means equal, iso-diametric: wheels having the same diameter.

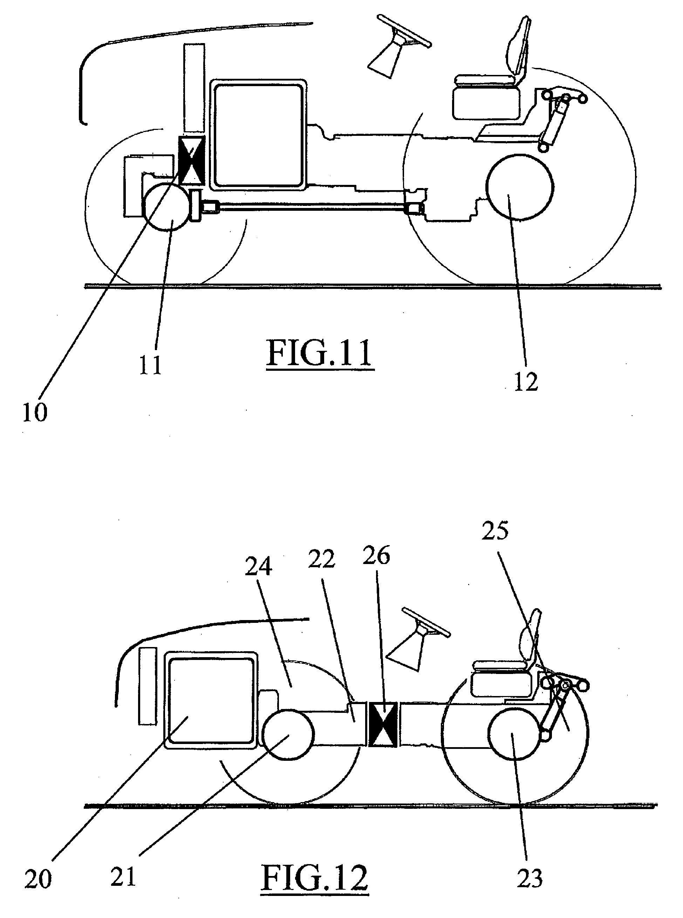

As can be seen in figures 11 and 12, the first relating to a conventional tractor and the second to an isodiametric tractor, in order to lower a conventional tractor, it is necessary to work on its two main encumbrances: the rear wheels which must be reduced and the motor with the transmission that must be lowered. The final result is the isodiametric tractor of figure 12. It should be noted that the rear wheels have become smaller and identical to the front wheels, whereas the motor has been moved in front of the front axis and is cantilever-flanged with respect to this.

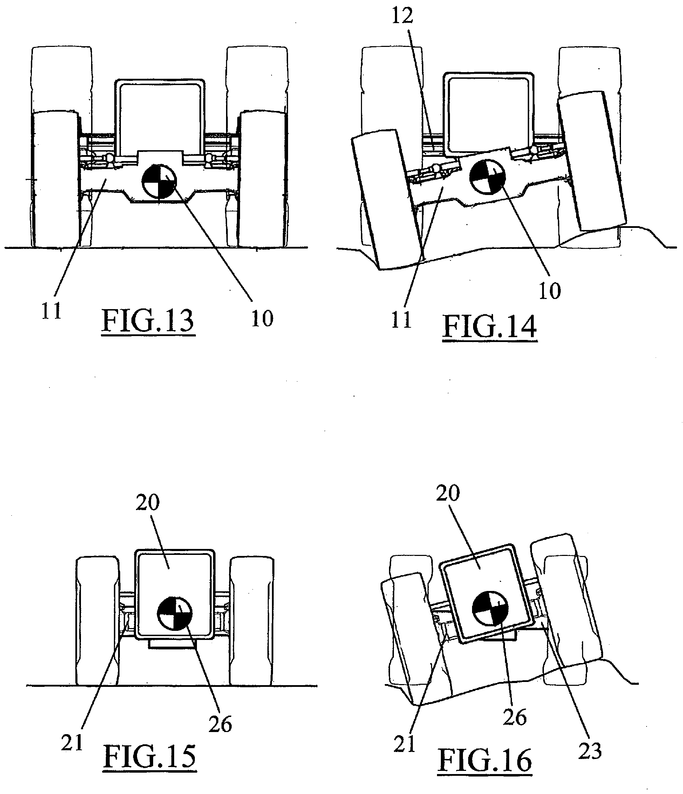

One of the main drawbacks of isodiametric tractors with respect to conventional tractors is that, in order to rest all four wheels on the ground, a conventional tractor is equipped with a swinging or oscillating hinge 10 positioned in the centre of the front axle 11 as can be seen in figures 13 and 14. This hinge 10 allows the front axle 11 to oscillate (or swing) with respect to a longitudinal axis, i.e. with respect to the rear axle 12 of the same tractor. Consequently, in a traditional tractor, the whole structure is rigid except for the front axle 11 alone, which is connected to the structure by means of a hinge 10. When observing a conventional tractor while it is working in the fields, it can be seen that the vehicle is substantially rigid while the front axle alone continues to oscillate around the hinge. This is extremely important, as it allows the front axle 11 to adapt itself to the ground (figure 14), therefore enabling the tractor to always have all four wheels adhering to the ground. While working, this hinge is not subjected to great stress as only vertical shear forces due to the weight of the overlying structure are exerted thereon.

Adapting an isodiametric tractor to the ground is much more complex and creates various problems which have so far not been solved. In the isodiametric tractor (figures 12, 15 and 16), the motor 20 is integral with the transmission which comprises: a front axle 21, an intermediate transmission 22 and a rear axle 23. In order to allow all four wheels to be adapted to the ground, the tractor must be divided into two parts oscillating with respect to each other (figure 12).

There is therefore a front part 24 which comprises the motor 20, the front axle 21 and a part of the transmission 22 and a rear part 25 which comprises the gearbox and rear axle 23. The two parts are connected to each other by a hinge 26 positioned in a longitudinal direction (figure 12) which allows the two axles 21, 23 to oscillate with respect to each other, guaranteeing the adherence of the four wheels to the ground (figure 16). Extremely high forces and torques are exerted on this hinge 26, which acts as oscillating or rolling hinge, contrary to the case of conventional tractors. When the isodiametric tractor is working, the two halves (front part 24 and rear part 25) are held together only by this hinge 26 which, for reasons of encumbrance, has relatively limited dimensions. Extremely high reaction torques are exerted on this, due to the weight of the tools assembled on the tractor both in front and behind, whereas the two axles 21, 23 oscillate continuously with respect to each other. This creates wear which does not allow the vehicle to exceed 800/1000 working hours without having to resort to extraordinary maintenance with the substitution of the hinge. Said maintenance is quite costly as it must be carried out in a specialized workshop, the vehicle must be dismantled and opened into two parts with consequent long stoppage times.

A second problem relates to the stability of the vehicle when it is moving and the comfort of the operator. Whereas, in fact, in a traditional tractor only the front axle 10 oscillates, i.e. a negligible mass with respect to the whole mass of the tractor, in the case of an isodiametric tractor, it is the whole front half 24 which oscillates (figures 12 and 16) which is equal to over half of the total mass of the tractor. This creates instability of the vehicle and disturbing vibrations which reduce the comfort of the operator.

It should also be considered that there are mainly two types of isodiametric tractors, both in any case with a hinge 26, positioned in a longitudinal direction (figure 12), which allows the two axles to oscillate with respect to each other.

A first type of isodiametric tractor comprises two steering wheels, those of the front axle, so as to allow the tractor to change direction with excellent turning radiuses.

A second type of isodiametric tractor, with central articulation, has both axles with fixed wheels and is equipped with a further central joint having a vertical axis, also called steering joint, which allows steering.

Another disadvantage of the presence of the oscillation joint in isodiametric tractors relates to the arrangement and adaption of the auxiliary systems of the tractor, among which, for example, the electric plant and hydraulic plant.

The tubes of the hydraulic plant and/or wires of the electric plant that must connect the devices situated on the rear portion with those on the front portion of the chassis, must in fact be designed, taking into account the reciprocal movements of these two portions of the chassis, requiring the use of solutions which are complicated, costly, difficult to assemble and, in some cases, not optimum for the specific functions of these plants.

EP 2 329 968 discloses a tractor of the traditional type, in which the front wheels, having a reduced diameter with respect to the rear wheels, are made drive wheels by means of a front differential which is driven by a motor positioned in the centre of the chassis. Two parallelogram suspensions are also envisaged at the opposite sides of the chassis, each carrying one of the front drive wheels that can be steered.

The differential casing seems to be cantilever applied to the chassis in front of the motor which is positioned in the centre of the chassis, and the two wheels are also applied in a front position with respect to the motor.

This construction is not of the type of interest to the field of application of this invention as the tractor is not isodiametric and the chassis is not composed of two parts articulated by a swing or roll joint described above positioned between the two parts of the chassis.

In the light of what is specified above, an objective of the present invention is to provide an isodiametric tractor which can effectively solve the whole series of drawbacks listed above.

A further objective is to achieve the above-mentioned objective with a simple, rational and low-cost solution.

Another objective is to avoid all problems of wear, maintenance and dismantling with correlated costs deriving from the presence of the known swing or roll joint.

These and other objectives are achieved thanks to the characteristics of the invention specified in the independent claim 1.

The dependent claims outline preferred or particularly advantageous aspects of the invention.

Thanks to the solution according to the present invention, the wheels of the axle can move in a vertical direction so that they can effectively adapt themselves to the irregularity of the ground, without requiring any oscillation of the front portion with respect to the rear portion of the chassis, which can therefore be produced as a single component in which the front and rear parts are rigidly integral with each other, eliminating any known swing or roll joint.

During these adaptation phases, the only masses in movement are only the wheels and the components that connect the wheels to the chassis. Consequently, the barycentre of the tractor always remains vertically aligned with the axis of the chassis, so that the inertial forces are so low as to not cause any significant shaking or vibrations.

This reduction in the shaking and vibrations leads to an increase in the stability and drivability of the tractor, which is therefore easier to manoeuvre also at relatively fast speeds.

The auxiliary plants, among which the hydraulic and electric plants, can be simplified and rationalized, as also the driving position and dashboard, which can be dimensioned without any particular restrictions and therefore with more space available.

The solution outlined above does not require any extension of the wheelbase of the tractor, or forward displacement of the axle with the driving wheels, maintaining the longitudinal dimensions of the machine, essential for its manoeuvrability required by specific uses, intact.

Further characteristics and advantages of the invention will appear evident from the following description provided for illustrative and non-limiting purposes, with the help of the figures of the enclosed drawings.
Figure 1 is a plan view of an isodiametric tractor according to the invention in a first embodiment with a rigid chassis and steering wheels in a first position.
Figure 2 is a plan view of the tractor of Figure 1 in a second steering position.
Figure 3 is a partially sectional raised view of the front axle of the tractor like that of figure 1, in a first implementation mode.
Figure 4 is a partially sectional raised view of the front axle of the tractor like that of figure 1, in a second implementation mode.
Figure 5 is a plan view of an isodiametric tractor according to the invention in a second embodiment with an articulated chassis in a first position.
Figure 6 is a plan view of the tractor of Figure 5 in a second steering position.
Figure 7 is a partially sectional raised view of the front axle of the tractor of figure 5, in a first implementation mode.
Figure 8 is a partially sectional front view of the front axle of the tractor like that of figure 5, in a second implementation mode.
Figures 9 and 10 show perspective views of the functioning of an isodiametric tractor according to the present invention.
Figures 11 and 12 show raised schematic side views of a tradition tractor and a usual isodiametric tractor, respectively.
Figures 13 and 14 show schematic front views of the traditional tractor of figure 11 in two different operative positions.
Figures 15 and 16 show schematic front views of the usual known isodiametric tractor of figure 12 in two different operative positions.

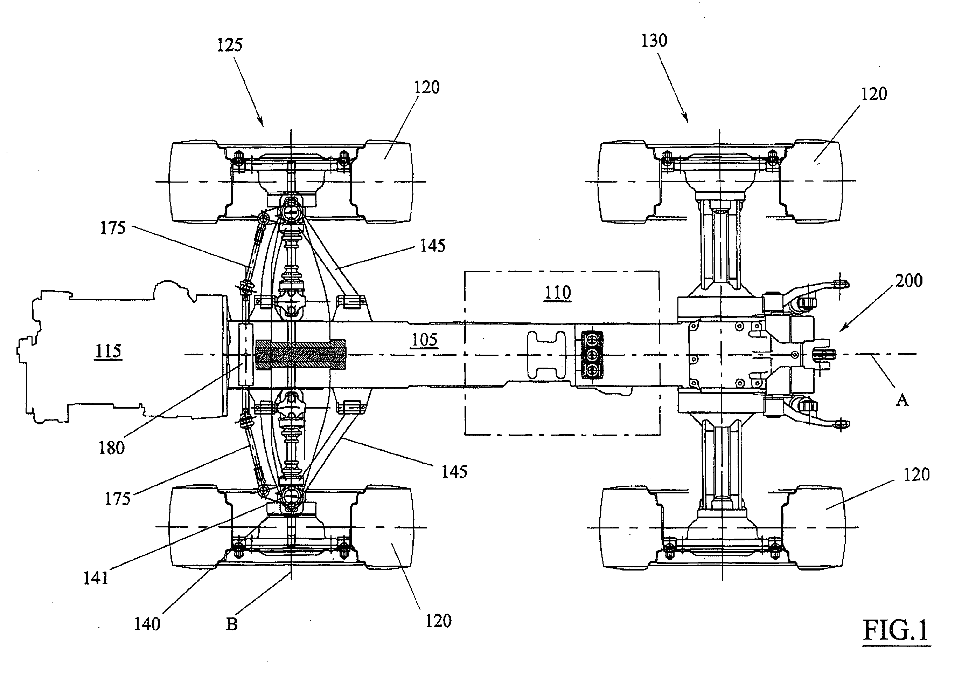

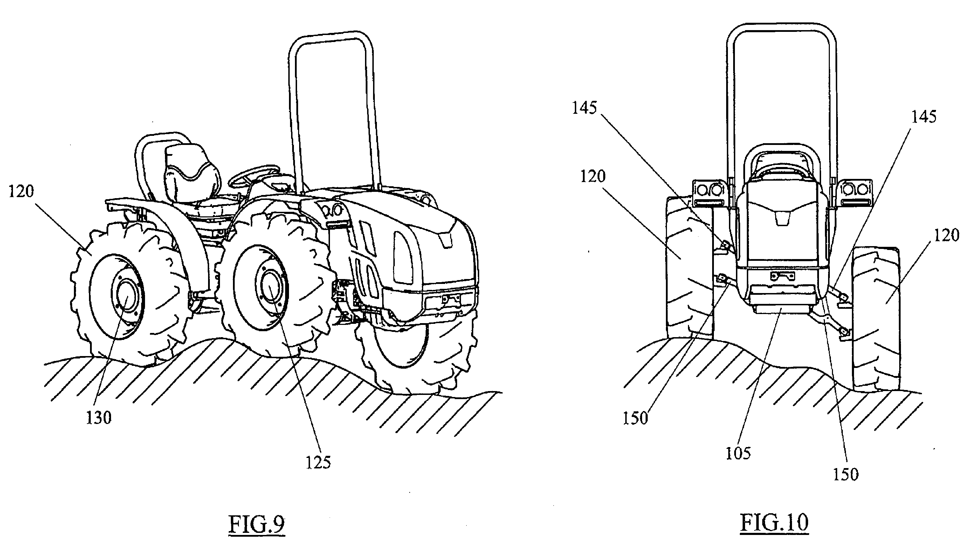

Figures 1 to 10 show arrangements of a chassis of a tractor of the isodiametric type according to the present invention which is mainly used in gardening or agricultural activities that must be carried out in reduced spaces, for example in specialized active agriculture in crops in vineyards, orchards, greenhouses, nurseries, micro-rows and poultry farming.

Figures 1 to 4 illustrate the isodiametric tractor according to the invention in a first embodiment having a rigid chassis 105 with front steering wheels, a driving position 110 with a seat for the driver and control commands, motorization means 115, for example a Diesel cycle internal combustion engine, and traction means suitable for allowing the motor to move the tractor forward on the ground.

The chassis 105 is suitable for carrying a tool (not shown) for working the land, which is normally of the mechanical or hydraulic type. This tool is fixed in the rear part of the chassis 105, on a normal three-point lifter 200. As illustrated in figure 1, the supporting chassis 105 is defined by a rigid spar which develops along a longitudinal axis A positioned horizontally.

The motorization means 115 are cantilever-sustained by the front end part of the chassis 105, whereas the driving position 110 is generally positioned towards the rear part. The traction means comprise four wheels 120, in opposing pairs, and respectively associated with a front axle 125 and a rear axle 130.

For illustrative and non-limiting purposes, the wheels 120 of this embodiment, which all have the same diameter, are all motorized, so that the tractor can be defined as isodiametric with integral traction.

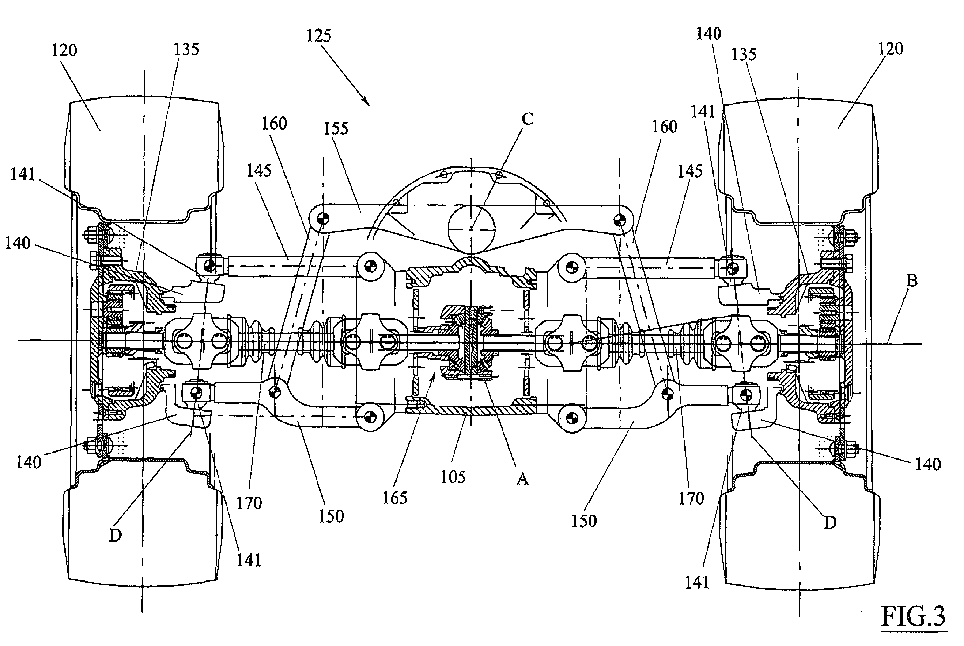

As illustrated in Figure 3, each of the wheels 120 of the front axle 125 is carried by a hub 135, which is rotatingly coupled with a support 140, so that the wheel 120 can rotate around a rotation axis B horizontal and orthogonal to the longitudinal axis A of the chassis 105.

The support 140 of each wheel 120 is connected to the chassis 105 by means of two rockers, of which an upper rocker 145 and a lower rocker 150 (Figure 3). Both rockers 145 and 150 have a first end articulated with respect to the chassis 105, so as to be able to rotate around a first axis parallel to the longitudinal axis A, and a second end articulated with respect to the support 140, so that the rocker 145, 150 and the support 140 can rotate reciprocally at least around a second axis parallel to the longitudinal axis A of the chassis 105.

In this way, the rockers 145 and 150, together with the chassis 105 and the support 140 define an wishbone kinematic group which allows the wheel 120 to make vertical movements with respect to the chassis 105.

Furthermore, the support 140 of every hub is connected to the rockers by means of ball joints 141 which allow the hub to rotate around a substantially vertical axis D , to allow the wheel to be steered.

In particular, the wishbone comprising the rockers 145 and 150 is substantially configurated as an articulated parallelogram, so that in vertical movements with respect to the chassis 105, the wheel 120 remains parallel to itself, i.e. in such a way that the rotation axis B always remains substantially horizontal.

It should be pointed out that, even if the rockers 145 and 150 can be assimilated to rods, each of them is preferably shaped like a fork (see figure 1) which is articulated to the chassis 105 in two points, whereas it is articulated to the support 140 of the wheel 120 in correspondence with its vertex.

The wishbones of the front axle 125 according to the present invention, are reciprocally connected by a further kinematic group. Said kinematic group comprises an oscillating bar 155 (Fig. 3), whose centre line is articulated in the upper part of the chassis 105 so as to be able to oscillate around a rotation axis C parallel and vertically aligned with the longitudinal axis A of the chassis 105. The kinematic group of this embodiment also comprises two rods 160. Each of the rods 160 has an end which is articulated to a respective free end of the oscillating bar 155, so as to allow reciprocal rotations around an axis parallel to the longitudinal axis A of the chassis 105, and a second articulated end at an intermediate point of the lower rocker 150 of a respective wishbone, again so as to allow reciprocal rotations around a parallel axis of the longitudinal axis A.

Alternatively, the articulated system can incorporate elastic components and/or dampers, for example instead of the rods 160. In this way, the reciprocity of the movements of the axle could be lost, which would become a truly independent suspension.

In particular, the oscillating bar 155 and rods 160 are dimensioned and configurated in such a way that, when the rotation axes B of the wheels 120 coincide, i.e. when the wheels 120 are aligned with each other, the kinematic group is perfectly symmetrical with respect to the vertical plane containing the rotation axis C and the longitudinal axis A. In this way, every movement of a wheel 120 in a vertical direction, upwards, for example, always corresponds to an equal vertical movement of the other wheel 120, but in the opposite direction, for example downwards.

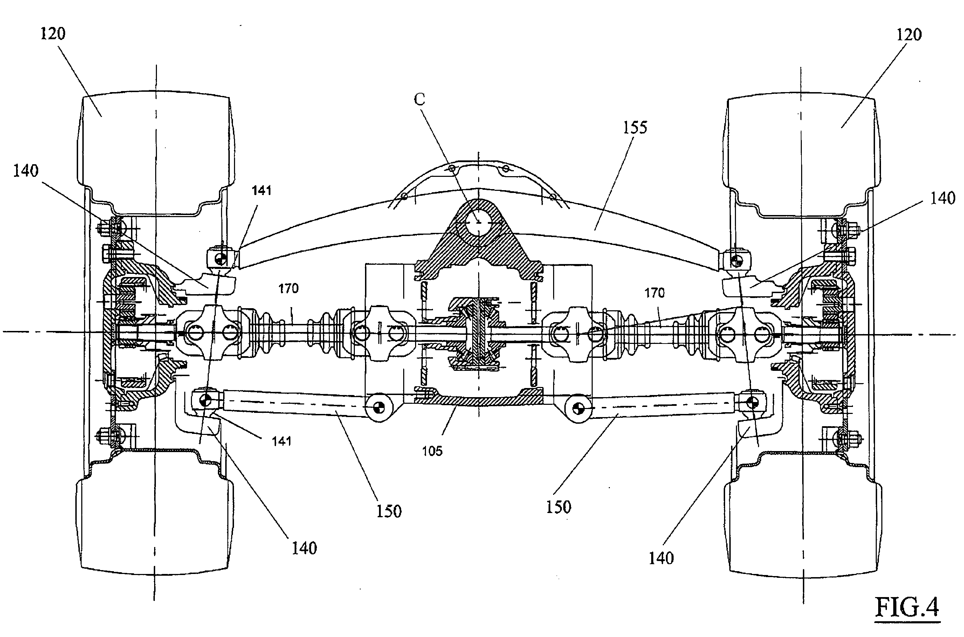

In a second embodiment illustrated in the section shown in Figure 4, the oscillating bar 155, extending from one wheel to the opposite wheel, is directly connected, by means of ball joints 141, to the supports 140 of the hubs, also making the function of the rockers 145 oscillating.

This embodiment, in addition to having a greater construction simplicity, also offers the advantage that, thanks to the greater length of the bar 155 with respect to the two lower oscillating rockers 150, the planes of the two wheels 120, in the case of oscillation, are arranged diverging downwardly, avoiding any possible interference of the steering wheels with the engine block.

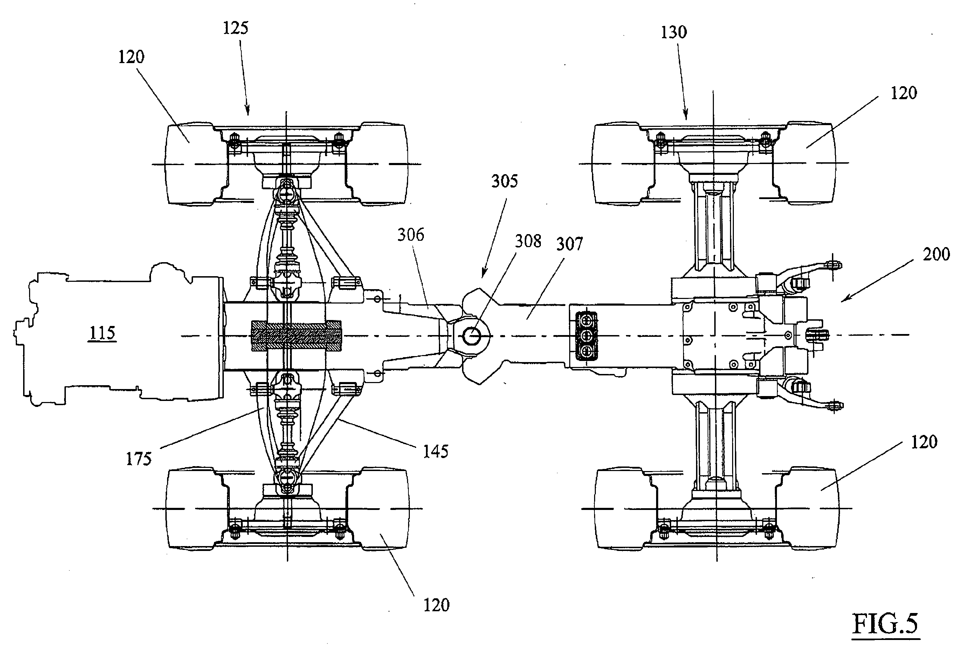

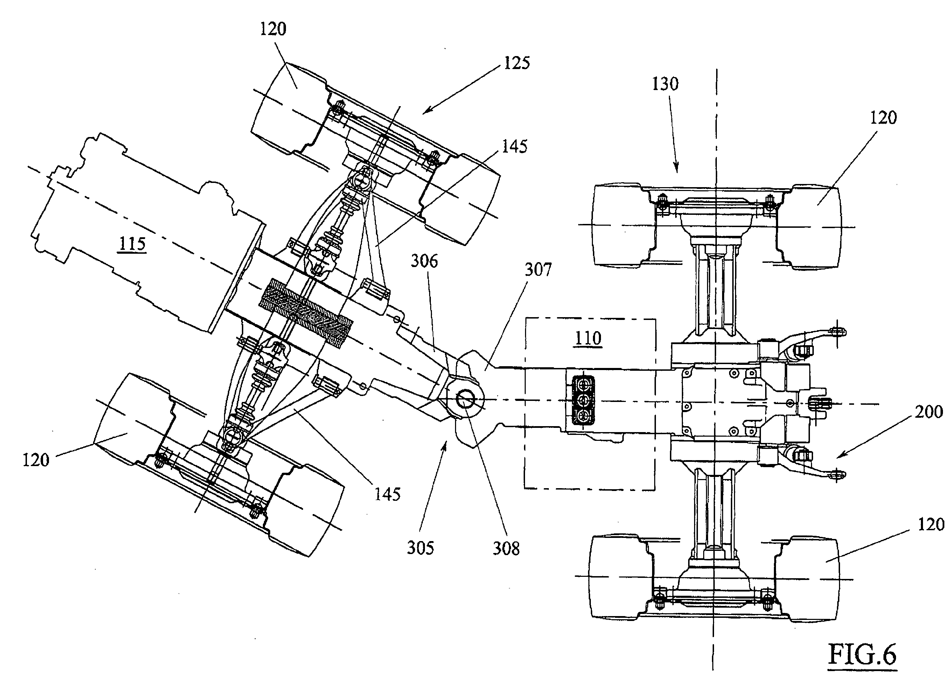

With reference to figures 5 to 8, in this second embodiment, the tractor of the invention envisages an articulated chassis 305, separated by a central joint 308 in a front part 306 and in a rear part 307, which, by arranging themselves in a rotated position with respect to each other as in Figure 6, put the tractor in a steering condition.

In Figures 5 to 8, the same numerical references indicate the same components as Figures 1 to 4.

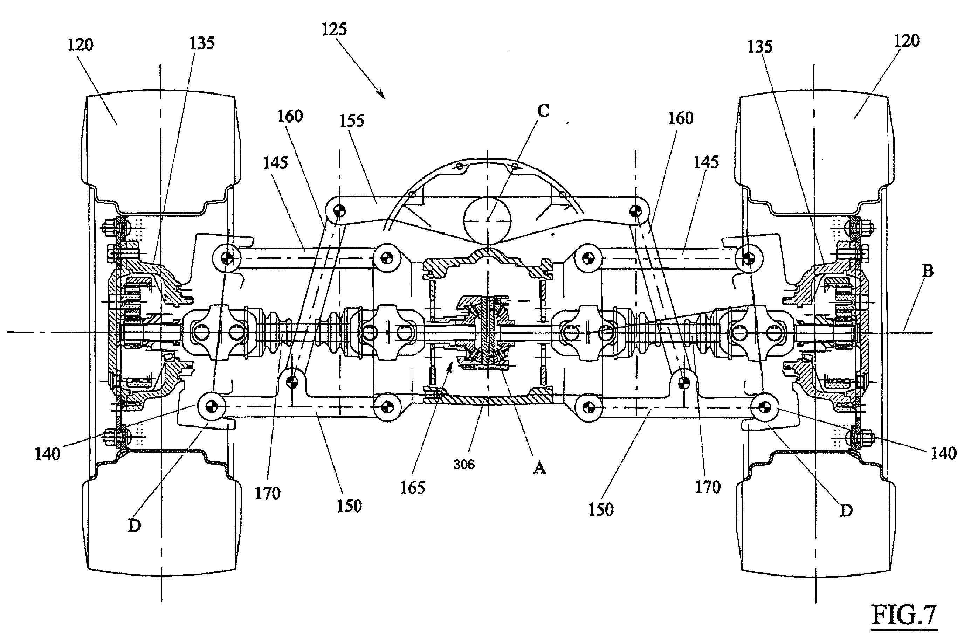

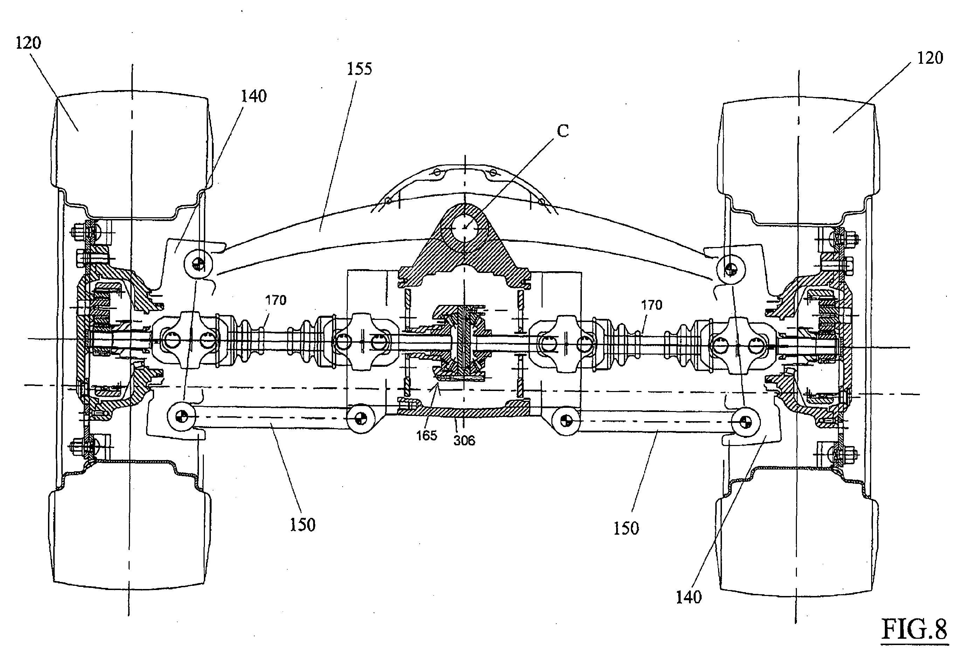

The only difference relates to the joints 141 between the rockers 145 and 150 and the respective supports 140, or between the upper bar 155 and the respective supports 140 of figures 3 and 4. In figures 7 and 8, these joints are not spherical but simple as they do not have the steering function due to the presence of the above-mentioned central joint 308.

In order to transmit movement to the wheels 120 of the front axle 125, the tractor comprises a usual differential 165, which is assembled inside the chassis 105 or 306 and is connected to the engine 115 by means of normal transmission means (not illustrated). The differential 165 is also connected to each wheel 120 of the front axle 125 by means of a respective double universal joint shaft 170.

In this way, each wheel 120 can be rotated even when, following a vertical movement, its rotation axis B is offset with respect to the output shaft of the differential 165.

Furthermore, thanks to the double universal joint, a homokinetic transmission is created, which ensures that the rotation rate of each wheel 120 is always the same as the rotation rate of the output shaft of the differential 165.

In the embodiment illustrated in Figures 1 to 4, the tractor also comprises a steering system of the wheels 120 of the front axle 125. This steering system firstly envisages that the support 140 of each wheel 120 is connected to the rockers 145 and 150 of the relative wishbone, or to the upper bar 155, by means of a ball joint which not only allows reciprocal rotations with respect to a rotation axis parallel to the longitudinal axis A of the chassis (for the functioning of the wishbone) but also a rotation of the support 140, and therefore of the wheel 120, around a rotation axis D orthogonal to the longitudinal axis A and substantially more or less vertical.

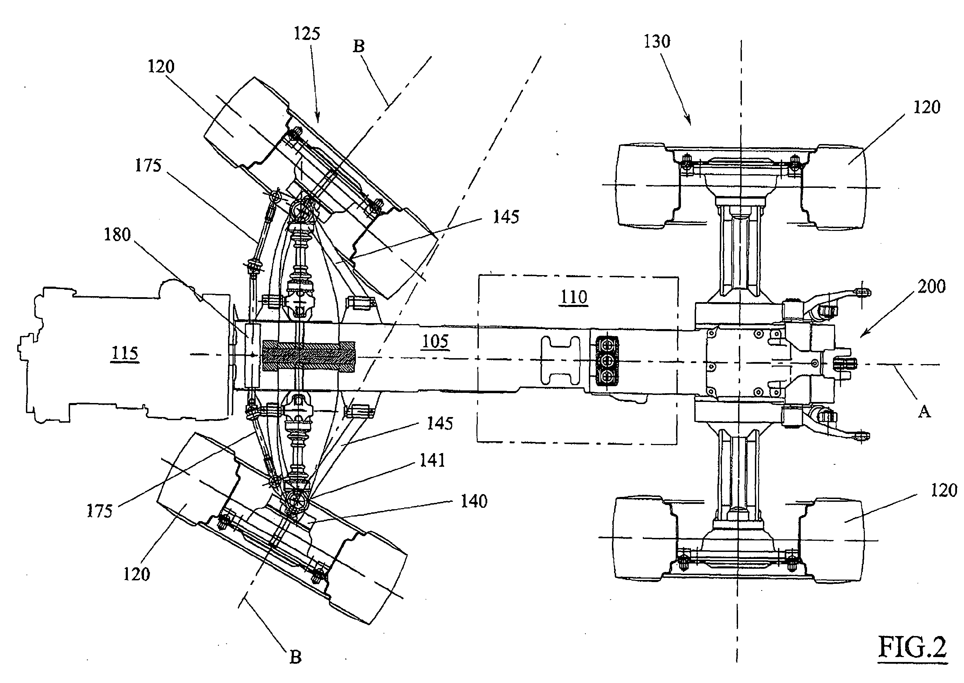

As illustrated in Figures 1 and 2, the steering system comprises usual steering arms 175, which are connected to the supports 140 of the wheels 120 and to a steering box 180. The steering box 180 is a device suitable for converting the rotating movement of a steering wheel positioned in correspondence with the driving position 110, in a straight movement of the steering arms 175, which in turn cause the corresponding rotation of the wheels 120 around the steering axes D.

Figure 5 illustrates an alternative embodiment of the front axle 125, in which the wheels 120 are not steering wheels. This type of axial only differs from the previous one in the absence of the steering system associated with the wheels 120, and due to the fact that the support 140 of each wheel 120 is connected with the rockers 145 and 150 of the relative wishbone by means of a simple joint, which only allows reciprocal rotations around an axis parallel to the longitudinal axis A of the chassis (for the functioning of the wishbone).

Thanks to the solution described above, when the tractor is operating on sloping or uneven land, the wheels 120 of the front axle 125 can effectively effect vertical movements with respect to the ground, adapting themselves to the conformation of the land and therefore always remaining stably resting on the ground.

The presence, in the various embodiments, of the common bar 155, centrally articulated (in C) to an upper part of the chassis 105 or 305, acts as a connection and constraint of each wheel 120 so that the articulated system of one wheel is compelled to move and become deformed contrarily and symmetrically with respect to the articulated system of the opposite wheel 120, allowing each wheel 120 to move in a substantially vertical direction with respect to the chassis 105 or 305. In particular, the wishbone system ensures that the adaptation of the axle 125 to the land only involves the movement of the wheels 120, whereas most of the masses of the tractor remain stationary. In this way, the barycentre of the tractor does not make any significant movements but remains vertically aligned with the longitudinal axis A of the chassis 105, advantageously reducing shaking and vibrations to which the tractor could be subjected during the adaptation phases of the front axle 125 to the land.

The reduction in these vibrations and shaking, in turn offers benefits in terms of stability and driveability, allowing the tractor to reach greater speeds with the same conditions of the land.

Furthermore, as the tractor comprises a chassis with a possible central joint which does not allow two parts of the chassis to oscillate around a horizontal axis, the connections between engine, driving cabin and working tools are considerably simplified, as also the relative auxiliary systems which normally complete the vehicle, among which, for example the electric plant and hydraulic plant. Finally, it should be pointed out that the horizontal and vertical orientations previously defined are provided with reference to the tractor resting on flat and horizontal land. The front and rear indications are supplied with reference to the forward driving direction of the tractor. An expert in the field can obviously effect numerous modifications of a technical applicative nature to the tractor described above, all included in the protection scope of the invention as claimed hereunder.

In particular, although reference has always been made to the front axle alone, the wishbone system described above can be applied to both axles, or possibly only to the rear axle, leaving the front axle fixed.

It can therefore be seen how, thanks to the solution of the present invention which eliminates the roll or swing joint, stress and components which are harmful to the tractor are thus avoided, there is a reduction in encumbrances with fewer design restrictions relating to the characteristics of the driving position, in particular with respect to the dimensioning of the dashboard and arrangement of the commands.

A further advantage of the present solution consists in the considerable construction simplification of a tractor of this kind, eliminating or minimizing maintenance, repair and substitution interventions, with a reduction in machine stoppages and relative costs.

The elimination of the known roll and swing joint simplifies the arrangement of the auxiliary systems of the tractor, among which, for example, the electric plant and hydraulic plant. This is because the tubes of the hydraulic plant and/or wires of the electric plant do not have to be designed taking into account the reciprocal movements of these portions of the chassis, thus providing simple, inexpensive solutions which can be easily assembled and are particularly functional.

## Claims

1. An isodiametric tractor with a simplified structure and maintenance comprising a supporting chassis (105,305), a front axle (125) and a rear axle (130) for pairs of front and rear wheels (120), wherein two front wheels (120) are driving wheels and activated by an engine (115) with the interpositioning of a differential (165) and wherein transmission means for transmitting the motion from the engine (115) to the pair of wheels (120) are entirely contained in the chassis, wherein, in addition, said engine (115) is cantilever-fixed to a front end of the chassis , **characterized in that** each wheel (120) of the front axle (125) is connected to the chassis (105,305) and/or to a differential casing (165) by a respective articulated system and said articulated system of the two wheels (120) of the front axle (125) comprises a common bar (155), centrally articulated (in C) to an upper part of said chassis (105,305) and which acts as a connection and constraint of each wheel (120) so that the articulated system of one wheel is compelled to move and become deformed contrarily and symmetrically with respect to the articulated system of the opposite wheel (120), allowing each wheel (120) to move in a substantially vertical direction with respect to the chassis (105, 305).

2. A tractor according to claim 1, **characterized in that** said chassis is rigid (105) and a steering system is associated with said front axle (125), including steering arms (175) articulatedly connected to supports (140) of each of the front wheels (120) and to a steering box 180 positioned on the chassis (105).

3. A tractor according to claim 1, **characterized in that** said chassis is articulated (at 305), and is separated by a central joint (308) in a front part (306) carrying said engine (115) and in a rear part (307).

4. A tractor according to any of the previous claims, **characterized in that** said articulated system comprises, associated with each wheel (120) of said front axle (125), an articulated parallelogram arrangement composed of two oscillating rockers (145,150) articulated on one side to supports (140) of said wheels and on the other side to said chassis (105:305,306).

5. A tractor according to claim 4, **characterized in that** each of the oscillating rockers (145,150) is connected to a respective support (140) of a hub of the wheel (120) by a ball joint (141).

6. A tractor according to claim 4, **characterized in that** two rods (160) are also envisaged, each of which is articulated at a first end to said oscillating bar (155) and at a second end to a rocker (150) of said parallelogram arrangement.

7. A tractor according to any of the claims from 1 to 3, **characterized in that** said common bar (155) extends to supports (140) of the hub of each wheel, an oscillating rocker (150) also being envisaged, in turn articulated at its ends on one side to a support (140) of said wheels and on the other side to said chassis (105; 305, 306).

## Patentansprüche

1. Isodiametrische Zugmaschine mit einem vereinfachten Aufbau und vereinfachter Wartung, umfassend: ein tragendes Fahrgestell (105, 305), eine Vorderachse (125) und eine Hinterachse (130) für ein Paar vorderer und hinterer Räder (120), wobei zwei vordere Räder (120) antreibende Räder sind und durch eine Kraftmaschine (115) mit einem dazwischen angeordneten Differential (165) aktiviert sind, und wobei ein Getriebemittel zum Übertragen der Bewegung von der Kraftmaschine (115) zu dem Paar von Rädern (120) vollständig in dem Fahrgestell enthalten ist, wobei zusätzlich die Kraftmaschine (115) an einem vorderen Ende des Fahrgestells über Ausleger fixiert ist, **dadurch gekennzeichnet, dass** jedes Rad (120) der Vorderachse (125) mit dem Fahrgestell (105, 305) und/oder einem Differentialgehäuse (165) durch ein jeweiliges Gelenksystem verbunden ist und das Gelenksystem der beiden Räder (120) der Vorderachse (125) eine gemeinsame Stange (155) umfasst, die zentral zu einem oberen Teil des Fahrgestells (105, 305) (in C) angelenkt ist und die als eine Verbindung und Beschränkung jedes Rades (120) wirkt, so dass das Gelenksystem eines Rades unter Zwang steht, sich zu bewegen und gegenteilig und symmetrisch in Bezug auf das Gelenksystem des gegenüberliegenden Rades (120) verformt zu werden, wodurch ermöglicht wird, dass sich jedes Rad (120) in einer im wesentlichen vertikalen Richtung in Bezug auf das Fahrgestell (105, 305) bewegt.

2. Zugmaschine nach Anspruch 1, **dadurch gekennzeichnet, dass** das Fahrgestell (105) starr ist und ein Lenksystem mit der Vorderachse (125) in Verbindung steht, das Lenkarme (175) aufweist, die gelenkig mit Halterungen (140) von jedem der Vorderräder (120) und mit einem Lenkkasten (180) verbunden sind, der an dem Fahrgestell (105) positioniert ist.

3. Zugmaschine nach Anspruch 1, **dadurch gekennzeichnet, dass** das Fahrgestell (bei 305) angelenkt und durch eine zentrale Kopplung (308) in einem Vorderteil (306), das die Kraftmaschine (115) trägt, und in einem hinteren Teil (307) getrennt ist.

4. Zugmaschine nach einem der vorhergehenden Ansprüche, **dadurch gekennzeichnet, dass** das Gelenksystem, das jedem Rad (120) der Vorderachse (125) zugeordnet ist, eine gelenkige Parallelogrammanordnung umfasst, die aus zwei oszillierenden Schwingen (145, 150) besteht, die an einer Seite an Halterungen (140) der Räder und an der anderen Seite an das Fahrgestell (105; 305, 306) angelenkt sind.

5. Zugmaschine nach Anspruch 4, **dadurch gekennzeichnet, dass** jede der oszillierenden Schwingen (145, 150) mit einer jeweiligen Halterung (140) einer Nabe des Rades (120) durch ein Kugelgelenk (141) verbunden ist.

6. Zugmaschine nach Anspruch 4, **dadurch gekennzeichnet, dass** auch zwei Stäbe (160) vorgesehen sind, von denen jeder an einem ersten Ende an der oszillierenden Stange (155) und an einem zweiten Ende an einer Schwinge (150) der Parallelogrammanordnung angelenkt ist.

7. Zugmaschine nach einem der Ansprüche 1 bis 3, **dadurch gekennzeichnet, dass** sich die gemeinsame Stange (155) zu Halterungen (140) der Nabe jedes Rades erstreckt, wobei auch eine oszillierende Schwinge (150) vorgesehen ist, die ihrerseits an ihren Enden auf einer Seite an eine Halterung (140) der Räder und auf der anderen Seite an das Fahrgestell (105; 305, 306) angelenkt ist.

## Revendications

1. Un tracteur à structure et maintenance simplifiées, comprenant un châssis porteur (105, 305), un essieu avant (125) et un essieu arrière (130) pour des paires de roues avant et arrière (120), dans lequel deux roues avant (120) sont des roues motrices et sont actionnées par un moteur (115) par l'intermédiaire d'un différentiel (165) et dans lequel des moyens de transmission pour transmettre le mouvement du moteur (115) à la paire de roues (120) sont entièrement contenus dans le châssis, dans lequel, en outre, ledit moteur (115) est fixé en porte-à-faux à une extrémité avant du châssis, **caractérisé en ce que** chaque roue (120) de l'essieu avant (125) est reliée au châssis (105, 305) et/ou à un carter de différentiel (165) par un système articulé respectif, et ledit système articulé des deux roues (120) de l'essieu avant (125) comprend une barre commune (155) articulée centralement (en C) sur une partie supérieure dudit châssis (105, 305) et qui fait fonction de liaison et de contrainte de chaque roue (120), de façon que le système articulé d'une roue soit obligé de se déplacer et de se déformer de manière contraire et symétrique par rapport au système articulé de la roue opposée (120), ce qui permet à chaque roue (120) de se déplacer dans une direction sensiblement verticale par rapport au châssis (105, 305).

2. Un tracteur selon la revendication 1, **caractérisé en ce que** ledit châssis est rigide (105) et audit essieu avant (125) est associé un système de direction comprenant des bras de direction (175) reliés de manière articulée à des supports (140) de chacune des roues avant (120) et à une boîte de direction 180 disposée sur le châssis (105).

3. Un tracteur selon la revendication 1, **caractérisé en ce que** ledit châssis est articulé (en 305) et est séparé par une articulation centrale (308) en une partie avant (306) portant ledit moteur (115) et en une partie arrière (307).

4. Un tracteur selon l'une quelconque des revendications précédentes, **caractérisé en ce que** ledit système articulé comprend, associé à chaque roue (120) dudit essieu avant (125), un agencement en parallélogramme articulé composé de deux leviers oscillants (145, 150) articulés, d'un côté, sur des supports (140) desdites roues et, de l'autre côté, sur ledit châssis (105 ; 305, 306).

5. Un tracteur selon la revendication 4, **caractérisé en ce que** chacun des leviers oscillants (145, 150) est relié à un support respectif (140) d'un moyeu de la roue (120) par une articulation à rotule (141).

6. Un tracteur selon la revendication 4, **caractérisé en ce qu'**il est également prévu deux bielles (160) dont chacune est articulée, à une première extrémité, sur ladite barre oscillante (155) et, à une seconde extrémité, sur un levier oscillant (150) dudit agencement en parallélogramme.

7. Un tracteur selon l'une quelconque des revendications de 1 à 3, **caractérisé en ce que** ladite barre commune (155) s'étend jusqu'à des supports (140) du moyeu de chaque roue, un levier oscillant (150) étant également prévu, lequel est articulé à son tour à ses extrémités, d'un côté, sur un support (140) desdites roues et, de l'autre côté, sur ledit châssis (105 ; 305, 306).
